# EUROPEAN PATENT APPLICATION

(11) **EP 4 421 722 A1**
(43) Date of publication of application: **28.08.2024**
(21) Application number: 24159200.5
(22) Date of filing: 22.02.2024
(51) Int. Cl.: G06Q 30/018, G06Q 50/02

(54) **METHOD TO GENERATE A PRODUCT CODE THAT VERIFIES THE AUTHENTICITY AND ORIGIN OF A COMMODITY**

(30) Priority: 22.02.2023 SE 2330099
(71) Applicant: BeeScanning Global AB, 711 31 Lindesberg (SE)
(72) Inventor: Lagerman, Björn, 71131 Lindesberg (SE)
(74) Representative: Heimdal, Pär

(57) **Abstract**

A product code requesting method (400) of a requesting part, for obtaining a product code (A, B, C) from a server (130), in order to mark and/ or verify a mark of a container (145) comprising a commodity. The method (400) comprises: collecting (401) image data of the commodity; determining (402) information data related to the collected (401) image data; providing (403) a request for the product code (A, B, C) and/ or content verification, comprising ID of the requesting part; the collected (401) image data, and the determined (402) information data, to the central data processing system (130); and obtaining (404) either the product code (A, B, C), or the content verification of the product code (A, B, C), from the server (130). A verification and product code generative method (500) of a server (130) is also disclosed.

## Description

### TECHNICAL FIELD

This document discloses a requesting method according to claim 1 and a corresponding providing method according to claim 6.

### BACKGROUND

Commodities, or agricultural products such as for example honey, wine, olive oil, chocolate, apple juice, saffron, vanilla, coffee, cinnamon, pepper, caviar, etc., are often subject to counterfeit. It is often relatively easy to falsify commodities for example by diluting or even completely replacing a real commodity with a cheaper product with similar properties. At the same time, fake food is often difficult to detect for the average consumer.

The economical earnings realised through fake food are enormous, while at the same time, legal risks are very small or possibly even non-existent. This fact has unfortunately been observed not the least by organised crime, to which counterfeit commodities presents an easy and safe way of substantial earnings, why fake food is likely to continue to plague society, unless a radical solution to this problem is encountered.

Sometimes colour and/ or aromatic chemicals are added to the fake food to complete the counterfeit illusion, which possibly may present a health issue to the consumer.

The origin of a commodity is currently very easy to falsify. A commodity may for example be sold as "ecological" while it in fact may be non-ecological. A wine (although not necessarily being fake as such) may be (re-) labelled as coming from a good repute region, for example. The consumer is thereby misled to pay a higher price than justified.

In Sweden, the marking of origin "within/ outside the EU" for honey is allowed (!), which gives the consumer little guidance concerning the origin of the product. Sometimes the Swedish flag or a company logotype in the Swedish national colours creates an illusion of a Swedish origin of the product, although this may not be the case.

The above-described problems of fake commodities are well known since exceptionally long time. Plinius the Elder observed that most saffron sold in Rome about year 70 AD was counterfeit to more or less degree. Yet, no reliable solution has been found to this issue. The consumer typically has no other choice than to take a trial-and-error approach in order to find a commodity that he/ she likes (which is not necessarily a guarantee that the commodity is not fake), or possibly research social media for recommendations, a solution which is obviously unreliable and easily could be manipulated.

Fake commodities are not only a problem for the consumer. They also present a menace of unfair competition for serious farmers and tradesmen, who in worst case may be forced out of business. As there is no reliable way for the serious farmers and tradesmen, besides plain trust, to verify that their commodities are not counterfeit, they may be regarded with the same suspicion as the less serious farmers and tradesmen by the consumer.

Yet another problem, from a consumer viewpoint, is that taste and quality of commodities, also when they are not counterfeited, are affected by for example diseases, temperature, precipitation, humidity, usage of pesticides/ fertilisers, micro-climate of the farm, cleanliness at the farm and other similar aspects. The consumer is likely to not be aware of the conditions under which the commodity has been grown. More knowledge of the growing conditions of the commodity would be helpful for the consumer to find a favourable product.

For example, the consumer may prefer autumn-harvested honey from a beehive situated in a forest region with a lot of heather, in the temperate climate zone. Currently, there is no method for the consumer to actually find this honey, besides personally visiting a beehive fulfilling the above conditions and buying the honey directly from him/ her.

Another problem for a consumer of a commodity is that it may be handled in a non-desired way after harvest, for example during storage or transportation, which may affect the quality of the commodity, even when the commodity per se is not counterfeit.

It would be desired to find a way to eliminate or reduce at least some of the above-mentioned problems.

### SUMMARY

It is therefore an object of this invention to solve at least some of the above problems and provide a method for enabling a quality verification of a commodity, assuring that the commodity has not been counterfeited.

According to a first aspect of the invention, this objective is achieved by a requesting method, of a requesting part. The requesting method concerns obtaining a product code from a server, in order to mark a product container containing a commodity, and/ or verify an already existing product code on the product container.

The request and the information provided to the server is dependent on the type of the requesting part, of: producer of the commodity, tradesman (or other person that handles, refines, packs or transports the commodity), or consumer (or a controller) that wants to verify the product code of the commodity.

The producer of the commodity may provide collected image data related to the commodity and/ or a production structure of the commodity. The producer of the commodity may also provide that the determined information data relates to harvest data of the commodity, to the server. The purpose of the request made by the producer is to obtain an original product code from the server, to be added to the product container containing the commodity. Hereby, the origin and integrity of the product container could be verified.

The tradesman may provide collected image data of the product code of the product container containing the commodity and determined trading related information data, to the server. The purpose of the request made by the tradesman is to verify via the server that the product code of the product container (which has been provided either by the producer or another tradesman) and get an updated product code to put on the product container. Hereby, the product code of the product container is verified, and thereby the origin and content of the product container is assured. By updating the product code based on information relating to the transportation/ handling/ refining, etc. of the agricultural product could be assured and verified at a later stage, for example by a consumer or controller of the product.

The consumer/ controller may provide collected image data of the product code of the product container containing the commodity and determined geographical information of the consumer/ controller. Hereby, the product code of the product container is verified from the server, and thereby the origin and content of the product container is authenticated and assured. Also, the transportation/ handling etc. of the commodity is assured and verified.

According to a second aspect of the invention, this objective is achieved by a providing method performed in a server. The method aims at generating and providing a product code to a requesting part, when requested, in order to mark a product container containing an commodity or verifying an already existing product code on the product container.

The method comprises obtaining a request for the product code and/ or product code verification from a requesting part, comprising identification information of the requesting part, image data collected by the requesting part, and information data related to the image data, determined by the requesting part.

As already discussed, the request and the information provided to the server is dependent on the type of the requesting part, of: producer of the commodity, tradesman (or other person that handles, refines, packs or transports the commodity), or consumer (or a controller) that wants to verify the product code of the commodity.

When the requesting part is a producer of the commodity, the image data may relate to the commodity and/ or a production structure of the commodity. The information data comprises harvest data of the production structure.

The method then may comprise estimating whether the obtained harvest data from the producer is plausible. Also, the method may comprise generating an original product code, based on the obtained data, in case the harvest data is estimated to be plausible. The method in addition may comprise providing the generated original product code to the producer of the obtained request.

When the requesting part is a tradesman, the image data relates to the product code of the product container containing the commodity and the information data comprises trading related information data of the tradesman.

The method may then comprise estimating whether the obtained product code is plausible. Also, the method may comprise generating a transaction product code, based on the obtained data, in case the obtained product code is estimated to be plausible. In addition, the method may comprise providing the generated transaction product code to the tradesman of the obtained request.

When the requesting part is a consumer or a controller, the image data relates to the product code of the product container containing the commodity; and the information data comprises geographical information of the requesting part.

The method may then comprise estimating whether the obtained product code is plausible. In case it is, a verification of the product code on the product container may be generated.

The method in addition may comprise providing the generated product code verification to the consumer or a controller of the obtained request.

Thanks to the described aspects, by collecting relevant and unique information and data along the growth and handling/ transportation of the commodity, it becomes possible to confirm that the production site of the producer is an actually existing farm, for example by image analysis of photos of the commodity captured during production. The reported harvest may be compared with harvest size of other producers of the same commodity at the same geographical location or situated at another geographical location but in a similar climate zone and having the same or similar conditions of cultivation. Alternatively, or in addition, a comparison may be made with historical yield of the producer. In case the deviation is smaller than a percentage, the yield may be considered plausible. In addition, an estimation of harvest size may be based on the image analysis of photos of the commodity captured during production.

Also, by collecting information and data relating to the transportation and/ or handling of the commodity, it could be assured or at least made plausible that the commodity has not been diluted, falsified, replaced or otherwise compromised neither by the producer nor by any other part handling the commodity until it reaches the consumer. Hereby, authenticity and origin of the commodity is assured.

The consumer is enabled to verify origin and integrity of the commodity, and also assure appropriate handling during storage and transportation for example. The consumer is also enabled to obtain additional information concerning the commodity that could be expected to influence the flavour and/ or eating experience of the commodity, for example growing conditions, sub species, harvest date, etc.

Fake food or commodities with other origin than marked could be avoided by the careful consumer. The serious producer of commodity is provided with a tool assuring that his/ her products are not compromised by some other involved part before it reaches the consumer. Thereby, the serious producer could most likely also motivate and achieve a higher price for his/ her products.

Other advantages and additional novel features will become apparent from the subsequent detailed description.

### FIGURES

Embodiments of the invention will now be described in further detail with reference to the accompanying figures, in which:
- **Figure 1A**: illustrates an example of a system and arrangements for obtaining and providing, respectively, a product code and/ or a verification of the product code.
- **Figure 1B**: illustrates a producer device taking an image of a production facility.
- **Figure 1C**: illustrates an example of a system and arrangements for obtaining and providing, respectively, a product code and/ or a verification of the product code.
- **Figure 2**: is a combined signalling scheme and block chart schematically illustrating information and data collection, data checking and product code generation for different parts in a chain of production and transportation.
- **Figure 3A**: illustrates an example of a product code.
- **Figure 3B**: illustrates an example of a product code.
- **Figure 3C**: illustrates an example of a product code.
- **Figure 4**: illustrates a method of a requesting part, for obtaining either a product code and/ or a verification of a product code from a server.
- **Figure 5**: illustrates a method performed in a server, for, when requested, generate and provide a product code, and/ or verify the product code.

### DETAILED DESCRIPTION

Embodiments of the invention described herein are defined as two interactive methods, one requesting method performed by a requesting part and one providing method performed by a server, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

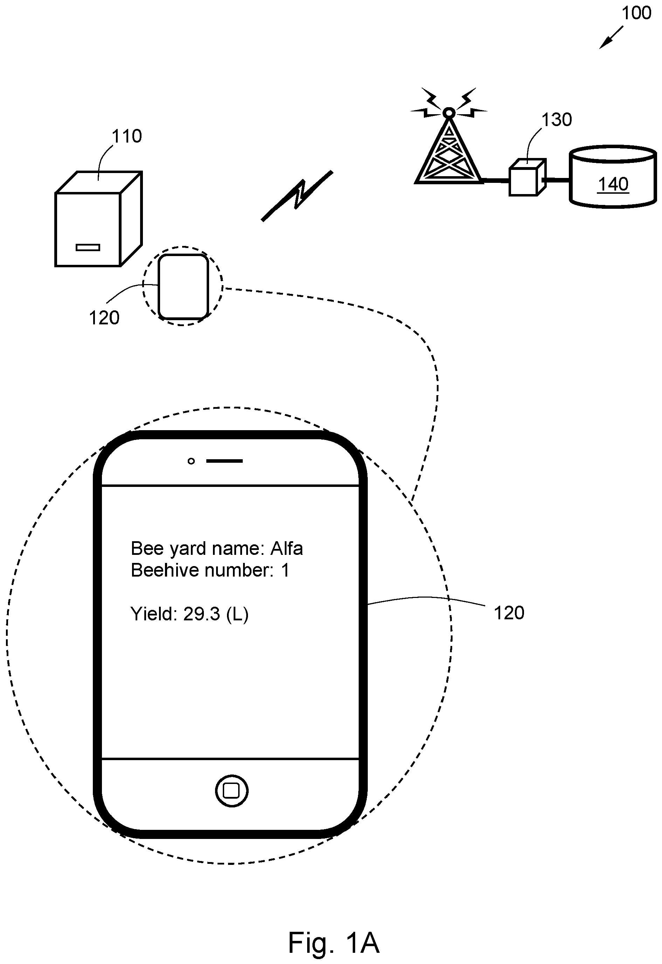

**Figure 1A** illustrates a scenario comprising a producer of a commodity on a production facility **110.** The producer uses a communication device **120** for registering information and communicate the registering information with a server **130.**

The terms commodity and production facility, respectively, are to be understood in broad sense, comprising or being based on a product created or processed governed by DNA and/ or of organic or inorganic processes, for example an agricultural product.

The commodity may be a cultivated crop/ harvest, such as for example fruit, vegetable, cereals, etc. The commodity may also comprise a collected product created by a biological process, for example fish, game, mushrooms, wild berries, flowers, seafood, etc. The commodity may also comprise a processed product created based on a cultivated or collected harvest, such as for example wine, olive oil, chocolate, apple juice, etc.

In the illustrated example, the commodity is exemplified as honey, the producer is exemplified as a beekeeper and the production facility 110 is exemplified as a beehive at a bee yard. This is however merely a non-limiting example of a commodity that may protected by the disclosed methods.

The production facility may be named differently depending on the type of commodity, and may comprise for example a farm, apiarist, plantation, plant nursery, slaughterhouse, fishing boat, etc.

In a first step, the producer may register various information of the producer and/ or the production facility 110, for example name, size, type of commodity, geographical position, etc. This information is then provided to the server 130, where it may be stored in a database **140.** Possibly, also various meta data of the communication device 120 of the producer may be collected and provided to the server 130, such as for example GPS position, wi-fi, wireless network identity for example in form of Media Access Control (MAC)-address of frequently used wireless networks, frequently used Bluetooth connections, a unique identity of the communication device 120 such as for example International Mobile Equipment Identity (IMEI), Internet Protocol (IP) address, phone number, serial number of the communication device 120, International Mobile Subscriber Identity (IMSI), etc.

The server 130 upon reception, may store the provided information concerning the producer and/ or the production facility 110 of the commodity, possibly associated with the collected meta data of the communication device 120 of the producer. By collecting several types of meta data associated with the producer and/ or the production facility 110, it could be assured that the producer is an actual producer, yet flexibility is achieved in case the producer for example changes communication device 120 and/ or mobile phone subscription.

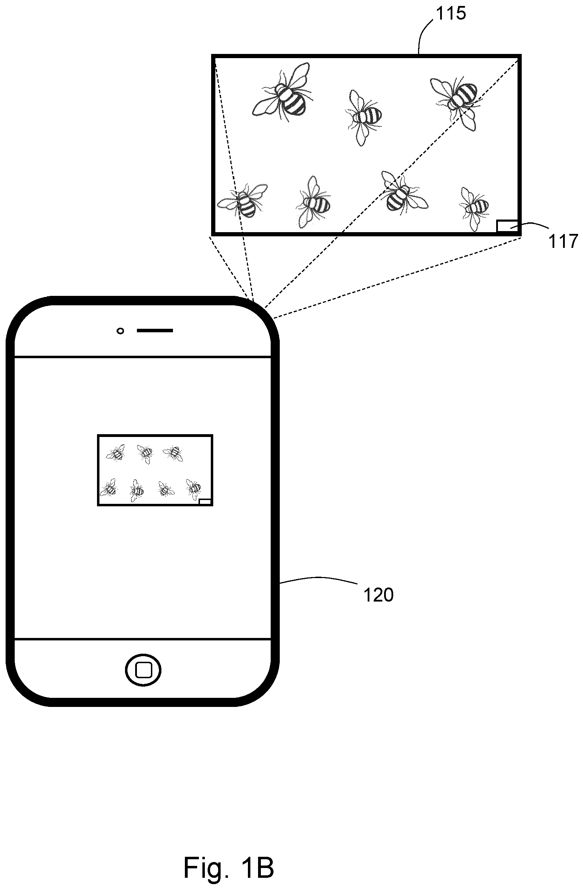

The producer may also capture one or several images of the commodity at the production facility 110, as illustrated in **Figure 1B****.** In the illustrated example, images are captured of a frame **115** in the beehive 110 with the communication device 120 of the producer. As the bees will be positioned at positions which is unique in that moment, the image of the bees in the frame 115 will present a unique fingerprint identifying the beehive 110 at the bee yard. In more general terms, the image may be captured of the commodity at the production facility 110, or an element 115 of the production facility 110.

The communication device 120 may be a smartphone or similar device comprising a camera and a processing unit having computational capacity. An example may be a handheld computer device or similar, used to register an image, i.e. taking a photo, of the specific object, i.e. a frame used in a bee hive. A specific application is arranged in the communication platform preferably by downloading the application from an application service provider such as App Store or other provider of applications for smartphones. The download is initiated by a request and the software application could then be downloaded to the smartphone/ communication device 120 and installed therein.

Other information may also be captured and stored associated with the captured image of the frame 115 in the beehive 110, such as GPS position of the communication device 120 when capturing the image and a time reference. In addition, the frame 115, the beehive 110, the bee yard and/ or the producer may be identified by an identity reference **117.**

The identity reference 117 may for example be a unique digital code such as a bar code, QR code or similar, which uniquely identifies the frame 115/ beehive 110/ bee yard/ producer. However, it may also be a code written in letters and/ or digits, a colour mark or similar. Alternatively, the code may comprise an informal code which yet presents a possibility to uniquely identify the frame 115/ beehive 110/ bee yard/ producer, for example a discoloration, scratch, damage etc. of the frame 115.

The server 130, when receiving the images of the commodity, may make a comparison with other stored images of the same kind of commodity in the database 140. Another check may be made concerning time and position of the captured image.

The server 130 may comprise a cloud-based service. In case wherein methods of artificial intelligence and/ or automatic learning is utilized it may be beneficial to aggregate images from a number of different users to train the algorithms. The image may be uploaded to the server 130 and a result from the analysis is communicated back to the smartphone/ communication device 120.

The result could be the numbers of identified objects and the number of identified abnormalities and/ or the relation of the number of identified objects with abnormalities relative the number of identified objects and/or a specific remedy or treatment scheme depending upon the relation of objects with abnormalities to all objects.

In case the image is not a copy of an already stored image, recently taken and the position of the meta data in the image corresponds with the production facility, it may be stored, associated with the frame 115/ beehive 110/ bee yard/ producer and a time stamp.

In some embodiments, an image analysis may be performed based on Artificial Intelligence (Al), for detecting anomalies of the commodity such as for example diseases. The image analysis may also, or alternatively be performed for estimating quality and/ or harvest quantity of the commodity/ honey at the beehive 110.

In embodiments wherein the farm is a beehive, objects in the captured image may be hon-eybees. The image recognition of the server 130 may comprise presence and/ or absence of varroa mite or other pest on the body of the bee, and possibly count the number of infected bees, or relation between infected bees and non-infected bees.

Varroa mite, or Varroa destructor is an external parasitic mite that attacks and feeds on hon-eybees. The disease caused by the mites is called varroosis. The Varroa mite is the parasite with possibly the most pronounced economic impact on the beekeeping industry, why detection and remedy are important for the honey production of the beehive 110.

At the same time, it is desired to avoid overestimation of the infestation of the varroa mite, as the producer then may apply unnecessary strong means, for example chemicals leaving residues possibly causing resistance to the chemicals among the bees. Unnecessary strong means could also result in unnecessary suffering of the bees, unnecessary costs, unnecessary environmental pollution, etc.

By making a better estimation of infestation, a more efficient, automatic, non-destructive, cost reducing, and environmentally friendly treatment is achieved.

The image analyses may thereby serve several purposes and bring several advantages. By assuring the unique character of each image depicting the commodity during production, it could be assured that the producer has an actual production farm wherein the commodity is created. Also, based on the amount of depicted commodities, an estimation of a realistic harvest could be made.

In addition, in some embodiments, a detection of anomalies/ abnormalities in obtained image data may be made. By identifying objects with abnormalities and counting number of objects with abnormalities in the images depicting the commodity, various diseases, fungous activity, mold growth, pest, etc., may be detected and reported back to the producer. The producer is thereby provided with an instrument to automatically and continuously monitor health/ quality issues at the farm. The producer could thereby start implementing appropriate measures to remedy the detected abnormalities, which over time leads to an increased production.

A quality estimation of the commodity may be made, based on the images depicting the commodity, which information may be useful for a consumer to select a product corresponding to his/ her taste. The quality estimation may also be used by the producer for motivating price issues.

The relation of the number of identified objects with abnormalities relative the number of identified objects, or quality estimation, may be used to determine the dosage of a treatment in the case of infestation of varroa in a honeybee population.

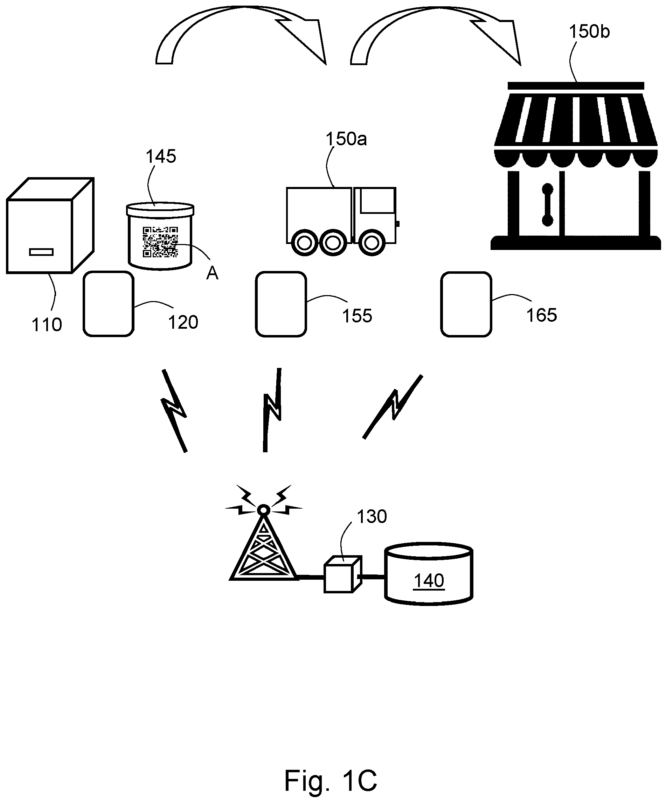

The producer may also provide yield of the commodity and request an original product code **A** (or a set of product codes), to be provided on a product container **145** containing the commodity, as illustrated in **Figure 1C****.**

In the illustrated example, the product code A is embodied as a Quick Response (QR) code. This is merely a non-limiting example, the product code A may alternatively be encoded into any other graphic encoding, for example barcode, European Article Number (EAN) code, data matrix, etc., or any digital profile code, or digital code. The product code A may alternatively comprise an array of letters, digits and/ or signs, representing the product code A.

In yet some alternative embodiments, the product code A may be encoded into a tag emitting wireless signals for example an RFID tag or Bluetooth tag with a unique encoding the product code A.

The original product code A may be generated by the server 130, based on the obtained information and data of the producer, the production facility, the commodity, the yield by using a block chain algorithm. The original product code A may then be provided to the producer, who may print the obtained original product code A on a tag/ label and put on the product container 145.

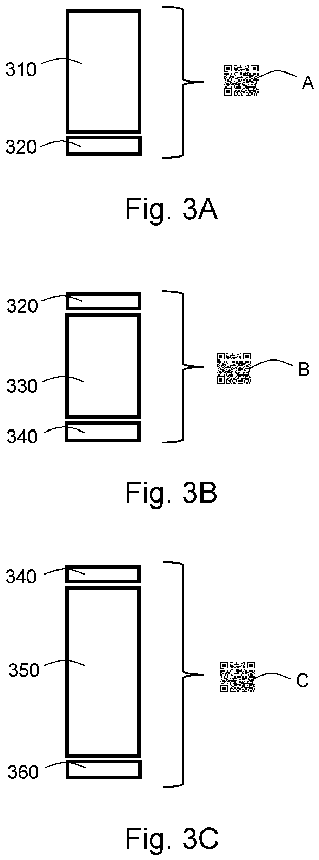

Details concerning the code generation and the block chain algorithm are schematically illustrated in **Figures 3A-3C** and discussed in the corresponding section of the description.

Thanks to the disclosed procedure, it could be assured by the server 130, that the producer of the commodity possesses a real farm, that the stated harvest is plausible and thereby indirectly that the commodity has not been diluted with another substance. By comprising information concerning the yield in the generated original product code A, it is assured that the producer cannot dilute the commodity after having obtained the original product code A. Also, validation of the original product code A and thereby also of the commodity is enabled by anyone, for example a tradesman or a consumer/ controller.

In the illustrated scenario in Figure 1C, the producer has obtained an original product code A and provided it to the product container/s **145** comprising the commodity.

In the illustrated example, a very simplified transportation chain from a producer to the end consumer is schematically illustrated. This is merely a non-limiting example, comprising one transportation vehicle **150a** and a store **150b.** Other examples may comprise several transportation vehicles, packaging and/ or processing the commodity, and/ or trade of the commodity in several levels such as wholesaling and retail, respectively.

In the current context, the expression "tradesman" is used for any entity that is trading, transporting or otherwise handling the commodity.

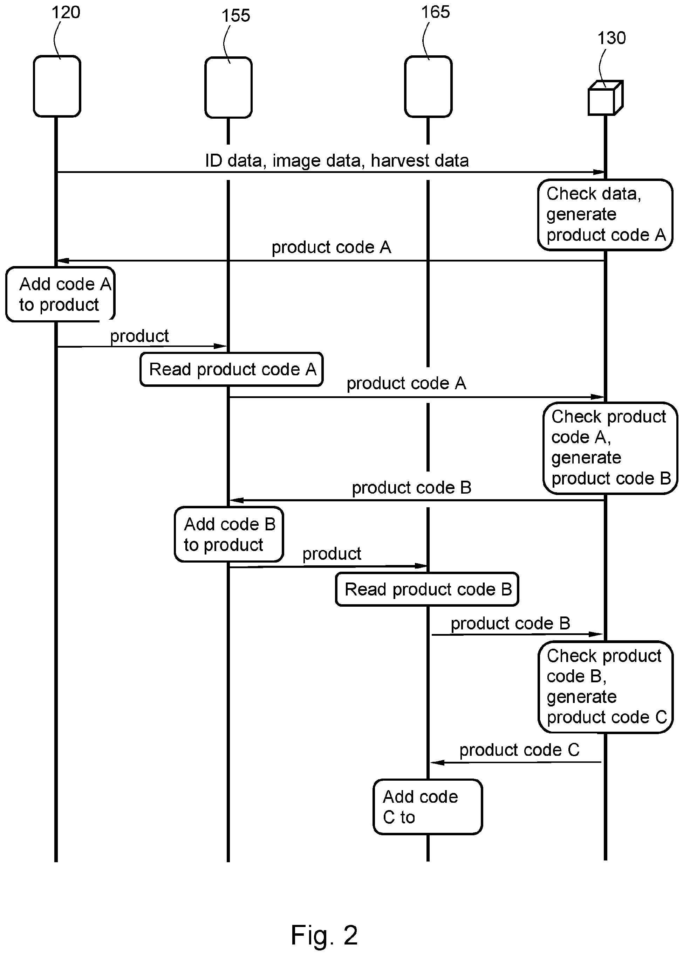

An overview of the communication between the involved parts is schematically illustrated in **Figure 2****.**

The tradesman of the transportation vehicle 150a, when arriving at the farm of the producer, may scan the original product code A on the product container 145 of the producer with his/ her communication device **155.** Various trading related information data of the tradesman and/ or the transportation vehicle 150a may then be provided to the server 130, together with a request for a verification of the scanned original product code A, and a request for a transaction product code B for the product container/s 145.

The server 130, upon obtaining the request and the attached information and data from the tradesman, may compare the original product code A with previously stored product codes in the database 140, assuring it's originality. A comparison between the current time and the time period when the original product code A was generated may be made, as well as a comparison between the current geographical position of the tradesman with the geographical position of the producer when requesting the original product code A.

In case the distance in time and/ or geographical distance exceeds a respective threshold limit, the server 130 may discontinue the generation of a new product code B, and instead generate and send an alert to the requesting tradesman, informing him/ her about the situation.

In case the original product code A could be verified as genuine and no threshold limit is exceeded, a new product code B is generated and provided to the requesting tradesman, in order to add it onto the product container/s 145.

The server 130 may keep track on the harvest information provided by the producer and thereby limit the amount of replacement product codes that are allowed to be issued.

The tradesman of the transportation vehicle 150a upon receiving the product code B, may put it on the product container/s 145 together with the original product code A.

When the next tradesman of the store 150b in the transportation chain receives the product container/s 145, he/ she may scan the product code B with an appropriate communication device **165** and provide it to the server 130 with a request for validation of the code, and for a new product code C to be added on the product container/s 145. Also other information is captured and provided to the server 130, such as for example time, geographical position, storage conditions, etc.

The server 130, upon obtaining the request and the attached information and data from the tradesman, of the store 150b may compare the product code B with previously stored product codes in the database 140, assuring it's originality. A comparison between the current time and the time period when the original product code B was generated may be made, as well as a comparison between the current geographical position of the tradesman with the geographical position of the producer when requesting the previous product code B.

A comparison between the respective geographical positions and time periods may be made. A comparison with a respective threshold limit may confirm realism of the transportation.

In case the distance in time and/ or geographical distance exceeds a respective threshold limit, the server 130 may discontinue the generation of a new product code C, for replacing the previous product code B, and instead generate and send an alert to the requesting tradesman, informing him/ her about the situation.

In case the product code B could be verified as genuine and no threshold limit is exceeded, a new product code C is generated and provided to the requesting tradesman, in order to be put on the product container/s 145.

Other information may also be provided to the tradesman, such as for example information concerning the producer of the commodity, geographical position and climate/ temperature conditions, the growth condition of the commodity, the harvest time, quality estimation during product generation, the transportation route, transportation time, transportation conditions, etc.

The tradesman thus obtains additional information concerning the commodity, it's quality and growth conditions and also the transportation ways and transportation/ storage conditions.

When the requesting part is a consumer or a controller, the procedure is similar to the above described, with the difference that no new product code A, B, C is generated by the server 130. The consumer may scan the existing product code C on the product container 145, or possibly several or even all of the product codes A, B, C on the product container 145, and provide the scanned/ collected product code C to the server 130, together with various other data such as geographical position and time.

The server 130 may then check the obtained product code C with stored data in the database 140, in combination with the obtained references to geographical position and time of the requesting part. The transportation chain and travel of the commodity in the product container 145 could be verified, and the original producer of the commodity could be verified. This verification may then be provided to the consumer/ controller.

The consumer/ controller is hereby assured that the commodity in the product container 145 has not been compromised or diluted. He/ she may also obtain additional information concerning the growing/ production/ transportation conditions of the commodity.

**Figures 3A-3C** schematically illustrate encoding of the respective product codes A, B, C, based on block chain technology.

A blockchain may be regarded as a distributed ledger with growing lists of records/ information that are securely linked together via cryptographic hashes.

Each block, or product code A, B, C, contains a cryptographic hash/ digest of the previous block, a timestamp, and transaction data. The timestamp proves that the transaction data existed when the block was created. Since each block contains information about the previous block, they effectively form a chain, with each additional block linking to the ones before it. Consequently, blockchain transactions are irreversible in that, once they are recorded, the data in any given block cannot be altered retroactively without altering all subsequent blocks.

Thus, the original product code A, schematically illustrated in Figure 3A, comprises collected data and information **310.** A hash value **320** is then calculated based on the data and information 310 according to some appropriate hash algorithm, such as e.g. Secure Hash Algorithm (SHA), Digital Signature Algorithm (DSA), Message Digest Algorithm (MDA), or similar.

The hash algorithm is a one-way compression function, having the property that a small change in the data/ information 310 whether on purpose or by mistake, will be detected as the hash values 320 will be different.

In Figure 3B, the hash value 320 of the original product code A is added to the information **330** provided by the tradesman. A new hash value **340** may then be calculated and added, to generate the product code B.

Similarly, as illustrated in Figure 3C, the hash value 340 of product code B may be added to the information **350** of the next tradesman and a new hash value **360** may be generated and added to the product code C, etc.

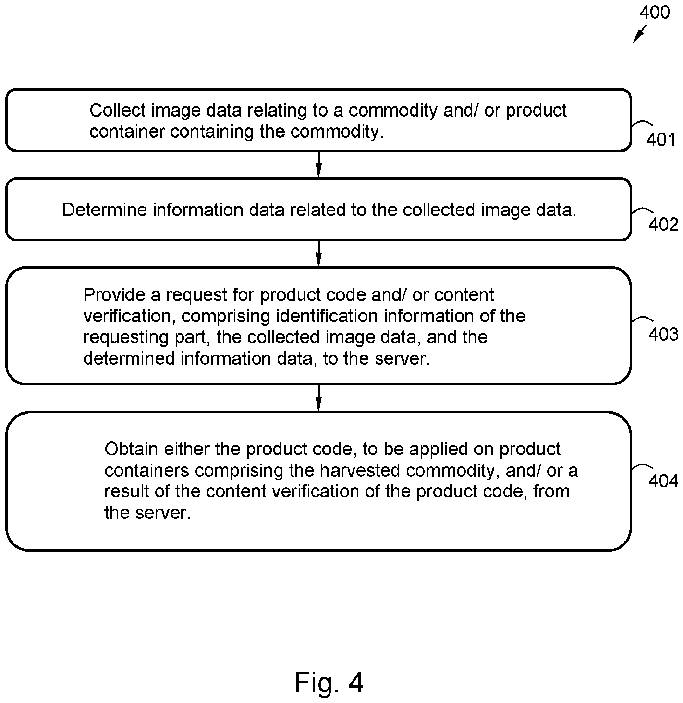

**Figure 4** illustrates an example of a requesting method **400** of a requesting part, to be performed by a communication device 120 of the requesting part. The method 400 aims at obtaining a product code A, B, C from a server 130, in order to mark a product container 145 containing a commodity/ agricultural product, and/ or verifying an already existing product code A, B, C on the product container 145, thereby also verifying the authenticity and origin of the commodity/ agricultural product.

The expression authenticity, in the current context, is the state of the commodity of the product container 145 is authentic, legitimate and true, i.e. confirming origin and how it has been produced and handled.

The requesting part may be producer of the commodity, a tradesman, or a consumer/ controller. The data and information provided together with the request may be different for different requesting parts. The obtained information that is returned from the server 130 may also be different.

The herein described method 400 may be implemented in software in the communication device 120, 155, 165 of the producer, the tradesman and/ or the consumer/ controller of the commodity. The software may for example be downloaded as an app.

In order to be able to verify and/ or obtain a product code A, B, C correctly, the method 400 may comprise a number of steps 401-404. Some of these steps 401-404 may be performed in some alternative embodiments. Further, the described steps 401-404 may be performed in a somewhat different chronological order than the numbering suggests. The method 400 may comprise the subsequent steps:
**Step 401** comprises collecting image data relating to the commodity and/ or the product container 145 containing the commodity.

The collected 401 image data may comprise comprises harvest data in form of images/ photos concerning the commodity when the requesting part is the producer. The collected 401 image data may thus comprise images captured by a communication device 120 of the commodity during a production stage.

When the requesting part is a tradesman, a consumer or controller, the collected 401 image data may comprise the product code A, B, C of the product container 145 containing the commodity. Thus, the tradesman/ consumer/ controller may take a photo of the product code A, B, C on the product container 145 with a communication device 155, 165.

**Step 402** comprises determining information data related to the collected 401 image data.

When the requesting part is a producer of the commodity, the determined information data related to the collected 401 image data comprises harvest data concerning the commodity, such as yield.

When the requesting part is a tradesman, the determined 402 information data may comprise trading related information data of the tradesman, such as information concerning storage, repackaging, transportation conditions, etc.

When the requesting part is a consumer or controller, the determined 402 information data may comprise geographical information of the requesting part.

**Step 403** comprises providing a request for the product code A, B, C and/ or product code verification. The provided request comprises identification information of the requesting part, the collected 401 image data, and the determined 402 information data, to the central data processing unit 130.

The provided request may also comprise e.g. a time reference, a geographical reference, information concerning the type of commodity, and/ or quality of the commodity in the product container 145.

The request, when the requesting part is a producer of the commodity, the request may be a request for an original product code A. This request may then comprise producer identification information and/ or production farm identification data, the collected 401 image data relates to the commodity and/ or a production structure of the commodity, and the determined 402 information data relating to harvest data of the commodity, to the server 130.

The request, when the requesting part is a tradesman, the request may be a request for a product code B, C. This request may then comprise tradesman identification information and/ or maintenance structure identification data of the tradesman's maintenance structure, the collected 401 image data comprising the product code A, B, C of the product container 145 containing the commodity, and the determined 402 trading related information data, to the server 130.

The request, when the requesting part is a consumer or a controller, the provided 403 request may be a request for product code verification. The request sent to the server 130 may comprise identification information of the requesting part; the collected 401 product code A, B, C of the product container 145, and the determined 402 information data.

**Step 404** comprises obtaining either the product code A, B, C, to be applied on product container/-s 145 containing the commodity, or a result of the verification of the product code A, B, C on the product container/-s 145, from the server 130.

When the requesting part is a producer of the commodity, the obtained product code A, B, C comprises the original product code A.

When the requesting part is a tradesman, the obtained product code A, B, C comprises the transaction product code B, C, and a verification of the original product code A and/ or any other product code B, C on the product container/-s 145.

When the requesting part is a consumer or a controller, the server 130 only provides a verification of the product code A, B, C, that has/ have been provided by the consumer/ controller.

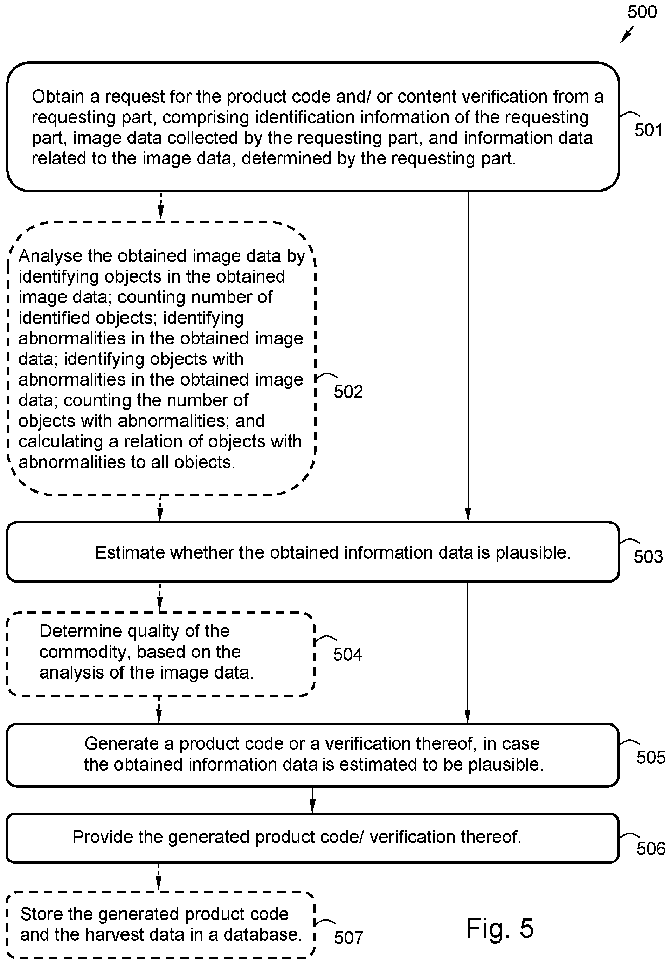

**Figure 5** illustrates an example of a providing method **500,** to be performed in a server 130. The method 500 aims at, when requested, generate and provide a product code A, B, C in order to mark a product container 145 containing a commodity, and/ or verify an already existing product code A, B, C on the product container 145.

The server 130 may be connected to a database 140, wherein various obtained data and information may be stored and obtained by the server 130.

The product code A, B, C and/ or verification may be different depending on the type of requesting part. Also other information of different kinds may be returned to the requesting part.

In order to be able to generate and provide and/ or verify the product code A, B, C correctly, the method 500 may comprise a number of steps 501-507. Some of these steps 501-507 may be performed in some alternative embodiments. Further, the described steps 501-507 may be performed in a somewhat different chronological order than the numbering suggests. The method 500 may comprise the subsequent steps:
**Step 501** comprises obtaining a request for the product code A, B, C and/ or product code verification from a requesting part.

The obtained request may comprise identification information of the requesting part, image data collected by the requesting part, and information data related to the image data, determined by the requesting part.

**Step 502** which may be comprised in some embodiments, concerns analysing the obtained 501 image data by identifying objects in the obtained 501 image data; counting number of identified objects; identifying abnormalities in the obtained 501 image data; identifying objects with abnormalities in the obtained 501 image data; counting the number of objects with abnormalities; and calculating a relation of objects with abnormalities to all objects.

The image recognition/ analysis, object identification and detection of abnormalities may be made by Artificial Intelligence (Al) and machine learning in a neural network. Image recognition may comprise analyses of each pixel of a provided image to extract useful information similarly to humans do. Al cameras can detect and recognize various objects developed through computer vision training.

Humans typically recognize images using the natural neural network that helps them to identify the objects in the images learned from their past experiences. Similarly, the artificial neural network works to help machines to recognize the images.

In Al neural networks, there may be multiple layers of neurons that can affect each other. The complexities of structure and architecture of the neural network may be different in different embodiments and implementations. Different neural networks may be dedicated for distinct commodities, being trained to identify abnormalities in the obtained images.

The sub step of counting the number of identified objects, may comprise counting the numbers of objects in the image. The counting is apart of the implementation as described above. Algorithms for calculating and/ or estimating the number of objects, such as insects/ bees, are described in, for example, "CrowdNet: A Deep Convolutional Network for Dense Crowd Counting" by the author Boominathan et.al., incorporated in this document by reference.

The third sub step, identifying abnormalities in said image, abnormalities could be identified by visual discrepancy such as colour variations, changes in reflectivity and/ or shadows. For colour variations, a discolouring in the surface of the object could be identified, such as a dark spot on a fruit or vegetable, where the discolouring is visually different from the colour of the object that is comparatively uniform. Changes in reflectivity could be used to identify abnormalities such as different insects or mites that could have a, compared to the objects, different reflectivity of the surface of the insect and/ or mite. For example, varroa or lice where the shell could be comparatively hard and reflective compared to the host where the lice and/ or varroa infest.

The fourth sub step, identify objects with abnormalities in said image, where each identified abnormality may be grouped with a specific object.

The fifth sub step, count the number of objects with abnormalities, each object grouped with an abnormality is counted.

The sixth sub step, calculate the relation of objects with abnormalities to all object, calculate the amount of abnormal objects in relation to all objects. The calculated relation may be presented to the user of the algorithm. The producer, such as the beekeeper, then decide how to treat the bee society.

**Step 503** comprises estimating whether the obtained 501 harvest data from the producer is plausible, when the requesting part is a producer of the commodity, the image data relates to the commodity and/ or a production structure 110, 115 of the commodity and the information data comprises harvest data of the production structure 110, 115.

When the requesting part is a tradesman, the image data relates to the product code A, B, C of the product container 145 containing the commodity and the information data comprises trading related information data of the tradesman: estimating 503 whether the obtained 501 product code A, B, C is plausible.

When the requesting part is a consumer or a controller, the image data relates to the product code A, B, C of the product container 145 containing the commodity; and the information data comprises geographical information of the requesting part: estimating 503 whether the obtained 501 product code A, B, C is plausible.

The estimation 503 whether the obtained 501 harvest data from the producer is plausible may in some embodiments be based on a comparison with harvest data of other producers of the same commodity in a similar geographical zone at the determined time; and/ or historical harvest data of the production structure 110, 115 of the producer, or another production structure at the same production farm of the producer.

**Step 504** which may be comprised in some embodiments wherein step 502 has been performed, concerns determining quality of the commodity, based on the analysis 502 of the image data.

The determined quality may be based on presence/ absence of abnormalities in the objects identified in the obtained 501 image data. The quality may for example be expressed as a number on a scale, or a percentage of objects comprising abnormalities, for example.

**Step 505** comprises generating 505 an original product code A, based on the obtained 501 data, in case the harvest data is estimated 503 to be plausible, when the requesting part is a producer of the commodity.

When the requesting part is a tradesman of the commodity, step 505 may comprise generating a transaction product code B, C, based on the obtained 501 data, in case the obtained 501 product code A, B, C is estimated 503 to be plausible.

When the requesting part is a consumer or a controller, step 505 may comprise generating a verification of the product code A, B, C of the product container 145 in case the obtained 501 product code A, B, C is estimated 503 to be plausible.

In some embodiments wherein step 502 and 504 have been performed, the generated 505 original product code A may be based on the determined 504 quality of the commodity.

**Step 506** comprises providing the generated 505 original product code A to the requesting part of the obtained 501 request, when the requesting part is the producer of the commodity.

When the requesting part is the tradesman, step 506 comprises providing the generated 505 transaction product code B, C to the tradesman of the obtained 501 request.

When the requesting part is the consumer or controller, step 506 comprises providing the generated 505 product code verification to the consumer or a controller of the obtained 501 request.

**Step 507** which may be comprised in some alternative embodiments, comprises storing the generated 505 original product code A and the obtained 501 harvest data in a database 140, thereby enabling a later product code verification of a product container 145 comprising the original product code A. The product code A and the obtained 501 harvest data may be stored associated with identity information of the producer, geographical information of the producer, timestamp and possibly also other information of the commodity (sort, race, growth conditions) etc.

The terminology used in the description of the embodiments as illustrated in the accompanying drawings is not intended to be limiting of the described methods 400, 500, system 100, server 130, communication device 120, 155, 165, the computer program and/ or the computer-readable medium. Various changes, substitutions and/ or alterations may be made, without departing from invention embodiments as defined by the appended claims.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims. The mere fact that certain measures or features are recited in mutually different dependent claims, illustrated in different figures or discussed in conjunction with different embodiments does not indicate that a combination of these measures or features cannot be used to advantage. A computer program may be stored/ distributed on a suitable medium, such as an optical storage medium or a solid-state medium supplied together with or as part of other hardware but may also be distributed in other forms such as via Internet or other wired or wireless communication system.

## Claims

1. A requesting method (400) of a requesting part, for obtaining a product code (A, B, C) from a server (130), in order to mark a product container (145) containing a commodity, and/ or verify an already existing product code (A, B, C) on the product container (145); wherein the method (400) comprises the steps of:
collecting (401) image data relating to the commodity and/ or the product container (145) containing the commodity;
determining (402) information data related to the collected (401) image data;
providing (403) a request for the product code (A, B, C) and/ or product code verification, comprising
identification information of the requesting part;
the collected (401) image data, and
the determined (402) information data, to the central data processing unit (130); and
obtaining (404) the product code (A, B, C), to be applied on product container (145) containing the commodity, and/ or a result of the verification of the product code (A, B, C) on the product container (145), from the server (130).

2. The requesting method (400) according to claim 1 wherein, when the requesting part is a producer of the commodity, the determined (402) information data related to the collected (401) image data comprises harvest data concerning the commodity; and wherein the provided (403) request is a request for an original product code (A), which comprises
producer identification information and/ or production farm identification data,
the collected (401) image data relates to the commodity and/ or a production structure of the commodity, and
the determined (402) information data relates to harvest data of the commodity, to the server (130); and wherein the obtained (404) product code (A, B, C) comprises the original product code (A).

3. The requesting method (400) according to claim 1 wherein, when the requesting part is a tradesman, the collected (401) image data comprises the product code (A, B, C) of the product container (145) containing the commodity; the determined (402) information data comprises trading related information data of the tradesman; and wherein the provided (403) request is a request for a transaction product code (B, C), which comprises
tradesman identification information and/ or maintenance structure identification data of the tradesman's maintenance structure,
the collected (401) image data comprises the product code (A, B, C) of the product container (145) containing the commodity, and
the determined (402) trading related information data, to the server (130); and wherein the obtained (404) product code (A, B, C) comprises the transaction product code (B, C).

4. The requesting method (400) according to claim 1 wherein, when the requesting part is a consumer or a controller, the collected (401) image data comprises the product code (A, B, C) of the product container (145) containing the commodity; the determined (402) information data comprises geographical information of the requesting part; and wherein the provided (403) request is a request for product code verification, which comprises
identification information of the requesting part;
the collected (401) product code (A, B, C) of the product container (145);
the determined (402) information data, to the server (130); and the result of the product code verification is obtained (404) from the server (130).

5. The requesting method (400) according to any one of claims 1-4, wherein the request provided (403) to the server (130) comprises:
a time reference, a geographical reference, information concerning the type of commodity, and/ or quality of the commodity in the product container (145).

6. A providing method (500) performed in a server (130), for, when requested, generate and provide a product code (A, B, C) in order to mark a product container (145) containing a commodity, and/ or verify an already existing product code (A, B, C) on the product container (145); the method (500) comprises:
obtaining (501) a request for the product code (A, B, C) and/ or product code verification from a requesting part, comprising
identification information of the requesting part,
image data collected by the requesting part, and
information data related to the image data, determined by the requesting part; and,
when the requesting part is a producer of the commodity, the image data relates to the commodity and/ or a production structure (110, 115) of the commodity, and the information data comprises harvest data of the production structure (110, 115):
estimating (503) whether the obtained (501) harvest data from the producer is plausible;
generating (505) an original product code (A), based on the obtained (501) data, in case the harvest data is estimated (503) to be plausible; and
providing (506) the generated (505) original product code (A) to the producer of the obtained (501) request; or
when the requesting part is a tradesman, the image data relates to the product code (A, B, C) of the product container (145) containing the commodity and the information data comprises trading related information data of the tradesman:
estimating (503) whether the obtained (501) product code (A, B, C) is plausible;
generating (505) a transaction product code (B, C), based on the obtained (501) data, in case the obtained (501) product code (A, B, C) is estimated (503) to be plausible; and
providing (506) the generated (505) transaction product code (B, C) to the tradesman of the obtained (501) request; or
when the requesting part is a consumer or a controller, the image data relates to the product code (A, B, C) of the product container (145) containing the commodity; and the information data comprises geographical information of the requesting part:
estimating (503) whether the obtained (501) product code (A, B, C) is plausible;
generating (505) a verification of the product code (A, B, C) of the product container (145) in case the obtained (501) product code (A, B, C) is estimated (503) to be plausible; and
providing (506) the generated (505) product code verification to the consumer or a controller of the obtained (501) request.

7. The providing method (500) according to claim 6, wherein the estimation (503) whether the obtained (501) harvest data from the producer is plausible is based on a comparison with harvest data of other producers of the same commodity in a similar geographical zone at the determined time; and/ or historical harvest data of the production structure (110, 115) of the producer, or another production structure at the same production farm of the producer.

8. The providing method (500) according to any one of claim 6 or claim 7, comprising analysing (502) the obtained (501) image data by
identifying objects in the obtained (501) image data;
counting number of identified objects;
identifying abnormalities in the obtained (501) image data;
identifying objects with abnormalities in the obtained (501) image data; counting the number of objects with abnormalities; and
calculating a relation of objects with abnormalities to all objects; and
determining (504) quality of the commodity, based on the analysis (502) of the image data; and wherein
the generated (505) original product code (A) is based on the determined (504) quality of the commodity.

9. The providing method (500) according to any one of claims 6-8, comprising
storing (507) the generated (505) original product code (A) and the obtained (501) harvest data in a database (140), thereby enabling a later product code verification of a product container (145) comprising the original product code (A).
